# EUROPEAN PATENT SPECIFICATION

(11) **EP 3 448 626 B1**
(45) Date of publication and mention of the grant of the patent: **20.07.2022**
(21) Application number: 17719239.0
(22) Date of filing: 21.04.2017
(51) Int. Cl.: B25J 5/00, B25J 9/00, B25J 9/16, B25J 11/00

(54) **MOBILE ROBOT**
MOBILER ROBOTER
ROBOT MOBILE

(30) Priority: 24.04.2016 DE 102016004840
(43) Date of publication of application: 06.03.2019
(73) Proprietor: Kastanienbaum GmbH, 80538 München (DE)
(72) Inventor: HADDADIN, Simon, 80803 Munich (DE); ZIMMERMANN, Philipp, 81371 Munich (DE)
(74) Representative: Habermann, Hruschka & Schnabel
(86) International application number: PCT/EP2017/059572
(87) International publication number: WO 2017/186602

(56) References cited:
- EP-A1- 2 868 439
- JP-A- S6 287 153
- JP-A- S61 252 084
- US-A1- 2011 071 679

## Description

The present invention relates to a mobile robot having a mobile base element and a torso being arranged on said base element.

Different configurations of mobile robots are known. For example, a mobile robot called "Justin" as developed by the German Aerospace Center (DLR) is known. This robot, which has been conceptualized as a humanoid, comprises a mobile base, which is a platform moving by wheels and on which a trunk or torso is arranged. The torso supports, similar as with human beings, at both sides of its upper shoulder areas to the left and to the right a robot arm or manipulator, respectively, which robot arm or manipulator comprises a plurality of axes. The torso itself is formed by several segments, which are connected with each other by means of horizontal hinges and which virtually form the backbone. By that the torso is able to erect, to bow and to bend in order to adapt itself to certain levels of working places. In this way it becomes possible to grasp and handle objects at a certain height, which height is restricted by the most possible erection of the torso and the length of the manipulators. The configuration of the torso with segments, which are hinged together and activated by actuators, requires some efforts both with respect to construction and control technology, which is not negligible. In order that the robot remains stable during each kind of work, which should be performed by it, the base consisting of the platform having wheels has to be able to adapt to any displacements of the center of gravity resulting from such kind of work. For that purpose the wheels of the platform are supported at axles which are extendable, so that the distance between each diametrically opposed wheels could be increased, when the center of gravity is being located at a higher level in case of an erected or extended torso, and vice versa.

A further mobile robot from the prior art is known as "PR2" by Willow Garage. This robot comprises a trunk or torso as well, which to both sides of its shoulder area supports robot arms which are hinged and comprise several axes. The torso can be adjusted as an entire unit with respect to height in relation to its movable base element, so that a certain working height can be reached for the robot arms so as to handle objects at a certain height.

For example, a mobile robot according to the preamble of claim 1 is known from JP S62-87153 A or JP S61-252084 A. Humanoid-type mobile robots are exemplarily disclosed in EP 2 868 439 A1 and US 2011/0071679 A1, respectively.

It is an object of the present invention to provide a mobile robot which comprises a simplified construction and still offers a high variability and flexibility both with respect to intended purpose and area of application.

This object is solved by means of a mobile robot according to claim 1.

Thus, the core of the invention relates to a mobile robot having a mobile base element and having a torso being arranged on the mobile base element, comprising at least two manipulators, which comprise a proximal base and a distal free end, in which the manipulators with their proximal base are arranged to both sides of the torso and opposite to each other, and in which the proximal base of the manipulators are movably, i.e. displacably guided in the torso. Therefore, the base of each manipulator can be displaced relatively with respect to the torso.

Generally, a first axis or arm member follows to the base of the manipulator, which arm member is rotatably supported in relation to said base. The rotary joint being realized thereby thus can, if necessary, be even further moved in relation to the torso by means of the solution as suggested by the invention, wherein according to a particularly preferred embodiment a motion along a linear axis, preferably along the longitudinal extension of the torso, shall be provided. By that an upward and downward movement of the manipulator can be achieved, in which the linear guidance of the manipulators are preferably running in a congruent way to both sides of the torso.

According to the invention the proximal base of the one manipulator and the proximal base of the other manipulator shall be movable independently and separately from each other. Such differential actuated control allows for the manipulators of such a mobile robot to cover a larger working range in total, since also the free distal ends can be moved away from each other and thereby span a diagonal working range between the free distal ends, thus at maximum up to the largest possible distance between these distal ends, so that also objects can be handled by them, which comprise a larger dimension. In order to realize such a differential control an own independent, separate control can be associated with each manipulator.

With respect to the linear guide of the proximal base of the respective manipulators it is possible that a common drive for the movement of the proximal base of the manipulators is provided or that the proximal base of each manipulator comprises an independent drive. As such, e.g. belt drives are suitable. Each manipulator of the mobile robot may consist of a plurality of arm members being movable with respect to each other, which thereby define corresponding degrees of freedom. Moreover, the arm members are configured, i.e. dimensioned and relatively hinged with respect to each other and to be activated by actuators in such a way, that the manipulators allow for a movement by which their free distal end can be directly moved close to the lateral, ventral and/or dorsal areas and surfaces of the torso, respectively. The arms of the robot being formed by the manipulators thereby can grasp behind the torso, in order to, for example, take objects from a support or from boxes being arranged at the back of the torso. The movability of the manipulators even further allows to take up objects directly from the floor in front, behind or from the sides of the robot.

According to the invention such movability is inter alia also realized in that the manipulators are configured to be compliant and/or sensitive. In other words the control of the robot arms can be performed by means of a corresponding impedance control. Further, according to the invention such impedance control is combined with a force control, which is designed with respect to the linear axis and/or also with respect to the mobile base element, which could comprise corresponding force sensors.

A substantial advantage of manipulators being displacable separately and independently from each other and along the longitudinal extension of the torso also lies in the fact that the position of the total center of gravity of the mobile robot can be specifically influenced and determined in consideration of the movements to be performed by the robot, the kind of the operations to be carried out by the manipulators and/or the weight of the object to be handled by the manipulators. The weight of the mobile base element could be defined to be lighter due to the more exact adjustability with respect to the center of gravity without influencing the stability of such a robot.

The activation and control of the wheels, which are arranged in the mobile base element, as well as the activation and control of both arms in turn can be conducted so as to refer back to the center of gravity, which may change depending from and during an operation being performed by the manipulators, so that the static equilibrium of the mobile robot can always be adapted.

Further advantages and features of the invention become apparent from the description of the embodiments as illustrated in the accompanying drawings, in which
- Fig. 1: is a perspective view of a mobile robot according to the invention;
- Fig. 2: a front view of such a mobile robot; and
- Fig. 3: a lateral view of such a mobile robot.

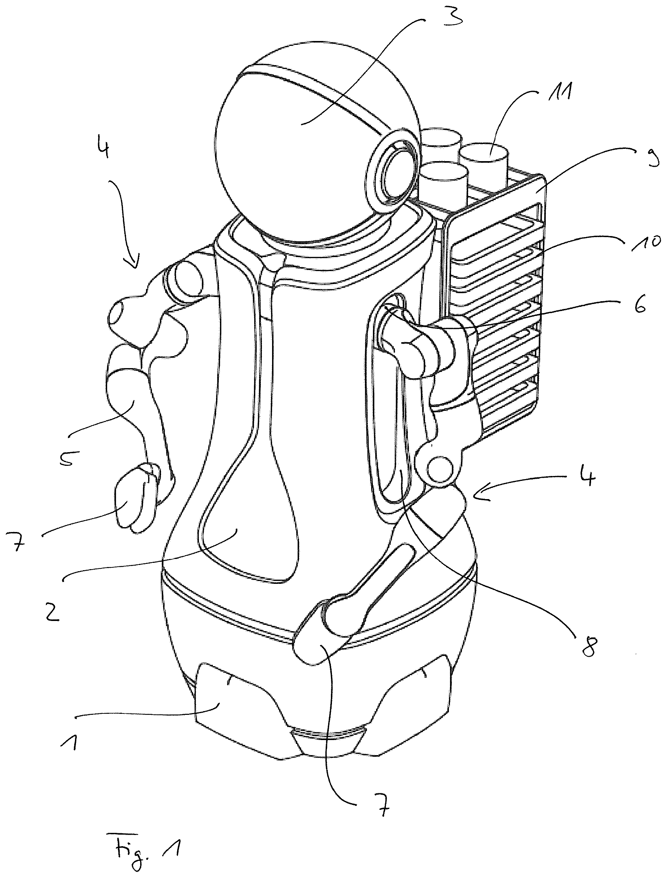

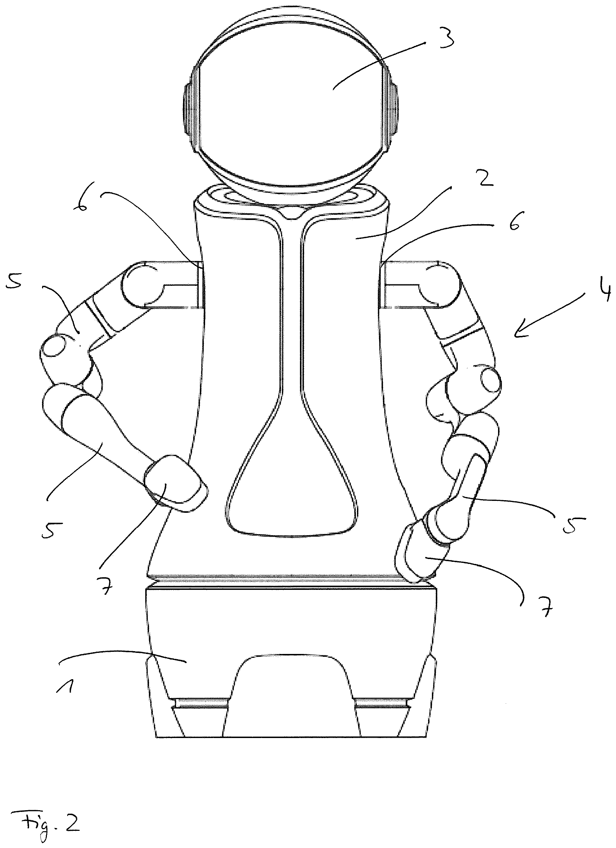

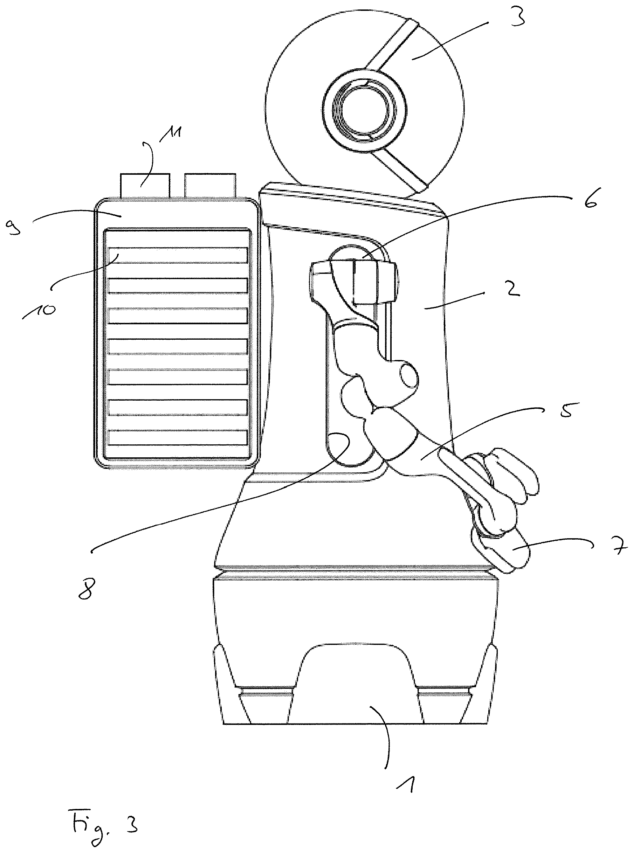

In Fig. 1 to 3 a mobile robot in one embodiment according to the invention is shown, which for example may be employed as a servicing robot.

The mobile robot consists of a mobile base element 1 which is intended as a driving platform by means of which the robot moves over ground. For that purpose motor-driven wheels (not shown) may be arranged within the base element 1.

On top of the mobile base element 1 a trunk or torso 2 is arranged, which may be arranged so as to be rotatable around its longitudinal axis in relation to the base element 1. Further a head 3 may be provided on the torso 2, which may be arranged so as to be rotatable in relation to the torso 2.

Robot arms or manipulators 4 are provided to both sides of the torso 2, which consist of a plurality of arm members 5 being hinged with respect to each other. The number of the arm members 5 and the joints, respectively, defines the number of degrees of freedom which are offered by such a manipulator 4 in total. The manipulators 4 each are provided with a corresponding compliance control.

Each manipulator 4 comprises a proximal base 6 which is arranged at the torso 2, and a free distal end 7, e.g. a gripper.

The proximal base 6 is movable in a linear displacable manner in relation to the torso 2 in its longitudinal direction, namely according to the invention the proximal base 6 of each manipulator 4 independently from each other.

Laterally the torso 2 comprises a linear slide guiding or guiding track 8, respectively, in which the proximal base 6, which preferably is formed as a ring element, may move alongside in order to have a better, in particular more stable guidance of said proximal base 6. The slide guiding 8 may be formed by a corresponding recess in the housing of the torso 2.

The drive for the displacement motion of the base 6 and thus of the manipulators 4 is located inside the torso 2, wherein preferably separate drives are provided for each manipulator 4.

At the backside of the torso 2 a backpack-like support 9 with boxes e.g. for trays 10 or for objects 11 is provided. The design and configuration of the manipulators 4 according to the invention enables that the trays 10 and objects 11, respectively, can be directly grasped by means of the free distal gripper 7.

## Claims

1. Mobile robot having a mobile base element (1) and a torso (2) being arranged on the mobile base element (1), the torso (2) comprising at least two manipulators (4), which comprise a proximal base (6) and a distal free end (7), in which the manipulators (4) with their proximal base (6) are arranged to both sides of the torso (2) and opposite to each other,
in which the proximal base (6) of the manipulators (4) is guided in the torso (2) along a linear axis in a displacable manner, and in which the proximal base (6) of the one manipulator (4) and the proximal base (6) of the other manipulator (4) are moveable separately from each other,
**characterized in that** each manipulator (4) is provided with a corresponding compliance control, and
**in that** the mobile robot comprises a force control, which is designed with respect to the linear axis and/or with respect to the mobile base element (1).

2. Mobile robot according to claim 1, in which a common drive is provided for the movement of the proximal base (6) of the manipulators (4) or the proximal base (6) of each manipulator (4) comprises an own independent drive.

3. Mobile robot according to claim 1 or 2, in which the manipulators (4) consist of a plurality of arm members (5) being moveable with respect to each other, which arm members (5) are configured such that the manipulators (4) allow for a movement in which their distal free ends (7) can be directly moved close to the lateral, ventral and/or dorsal areas of the torso (2).

4. Mobile robot according to claim 3, in which the manipulators (4) each consist of six arm members (5), one arm member (5) being hinged with respect to the next arm member (5) thereby defining six degrees of freedom for each manipulator (4).

5. Mobile robot according to claims 1 to 4, in which an independent control is associated to each manipulator (4).

6. Mobile robot according to one of claims 1 to 5, in which the manipulators (4) are configured such that the position of the total center of gravity of the mobile robot can be specifically influenced and/or determined in consideration of the robot motion, the kind of the operations to be performed by the manipulators (4) and/or the weight of an object to be handled by the manipulators (4).

## Patentansprüche

1. Mobiler Roboter mit einem mobilen Basiselement (1) und mit einem auf dem mobilen Basiselement (1) angeordneten Torso (2), wobei der Torso (2) zumindest zwei Manipulatoren (4) aufweist, die eine proximale Basis (6) und ein distales freies Ende (7) aufweisen, wobei die Manipulatoren (4) mit ihrer proximalen Basis (6) zu beiden Seiten des Torsos (2) einander gegenüberliegend angeordnet sind, wobei die proximale Basis (6) der Manipulatoren (4) in dem Torso (2) entlang einer Linearachse verschieblich geführt ist, und wobei die proximale Basis (6) des einen Manipulators (4) und die proximale Basis (6) des anderen Manipulators (4) getrennt voneinander bewegbar sind, **dadurch gekennzeichnet, dass** jeder Manipulator (4) mit einer entsprechenden Nachgiebigkeitsregelung versehen ist, und
dass der mobile Roboter eine Kraftregelung aufweist, die in Bezug auf die Linearachse und/oder in Bezug auf das mobile Basiselement (1) ausgelegt ist.

2. Mobiler Roboter nach Anspruch 1, bei dem ein gemeinsamer Antrieb für die Bewegung der proximalen Basis (6) der Manipulatoren (4) vorgesehen ist oder die proximale Basis (6) von jedem Manipulator (4) einen eigenen Antrieb aufweist.

3. Mobiler Roboter nach Anspruch 1 oder 2, bei dem die Manipulatoren (4) aus mehreren, zueinander beweglichen Armgliedern (5) bestehen, die so ausgebildet sind, dass die Manipulatoren (4) eine Bewegung gestatten, bei der deren distales freies Ende (7) unmittelbar an die lateralen, ventralen und/oder dorsalen Bereiche des Torsos (2) heran bewegt werden kann.

4. Mobiler Roboter nach Anspruch 3, bei dem die Manipulatoren (4) jeweils aus sechs Armgliedern (5) bestehen, wobei ein Armglied (5) in Bezug auf das nächste Armglied (5) gelenkig gelagert ist, wodurch sechs Freiheitsgrade für jeden Manipulator (4) definiert werden.

5. Mobiler Robot nach den Ansprüche 1 bis 4, bei dem eine unabhängige Steuerung jedem Manipulator (4) zugeordnet ist.

6. Mobiler Roboter nach einem der Ansprüche 1 bis 5, bei dem die Manipulatoren (4) so konfiguriert sind, dass sich die Lage des Gesamtschwerpunkts des mobilen Roboters unter Berücksichtigung des von diesem zu vollführenden Bewegungen, der Art der durch die Manipulatoren auszuführenden Operationen und/oder des Gewichts des durch die Manipulatoren (4) zu handhabbaren Gegenstandes gezielt beeinflussen lässt.

## Revendications

1. Robot mobile présentant un élément de base mobile (1) et un torse (2) étant agencé sur l'élément de base mobile (1), le torse (2) comprenant au moins deux manipulateurs (4), qui comprennent une base proximale (6) et une extrémité libre distale (7), dans lequel les manipulateurs (4) avec leur base proximale (6) sont agencés des deux côtés du torse (2) et opposés l'un à l'autre,
dans lequel la base proximale (6) des manipulateurs (4) est guidée dans le torse (2) de manière mobile le long d'un axe linéaire, et dans lequel la base proximale (6) du premier manipulateur (4) et la base proximale (6) de l'autre manipulateur (4) sont mobiles séparément l'une de l'autre,
**caractérisé en ce que** chaque manipulateur (4) est muni d'une commande de conformité correspondante, et
**en ce que** le robot mobile comprend une commande de force, qui est conçue par rapport à l'axe linéaire et/ou par rapport à l'élément de base mobile (1).

2. Robot mobile selon la revendication 1, dans lequel un entraînement commun est prévu pour le déplacement de la base proximale (6) des manipulateurs (4) ou la base proximale (6) de chaque manipulateur (4) comprend un entraînement indépendant propre.

3. Robot mobile selon la revendication 1 ou 2, dans lequel les manipulateurs (4) sont constitués d'une pluralité d'éléments de bras (5) mobiles les uns par rapport aux autres, lesquels éléments de bras (5) sont configurés de telle sorte que les manipulateurs (4) permettent un déplacement dans lequel leurs extrémités libres distales (7) peuvent être déplacées directement près des zones latérale, ventrale et/ou dorsale du torse (2).

4. Robot mobile selon la revendication 3, dans lequel les manipulateurs (4) consistent chacun en six éléments de bras (5), un premier élément de bras (5) étant articulé par rapport à l'élément de bras suivant (5), en définissant ainsi six degrés de liberté pour chaque manipulateur (4).

5. Robot mobile selon les revendications 1 à 4, dans lequel une commande indépendante est associée à chaque manipulateur (4) .

6. Robot mobile selon l'une quelconque des revendications 1 à 5, dans lequel les manipulateurs (4) sont configurés de telle sorte que la position du centre de gravité total du robot mobile peut être influencée et/ou déterminée de manière spécifique en tenant compte du mouvement du robot, du type des opérations devant être effectuées par les manipulateurs (4) et/ou du poids d'un objet devant être manipulé par les manipulateurs (4).
